(19) Europäisches Patentamt
European Patent Office
Office européen des brevets

(11) **EP 4 745 867 A1**

(12) **EUROPEAN PATENT APPLICATION**

(43) Date of publication:
**20.05.2026 Bulletin 2026/21**

(21) Application number: **25182910.7**

(22) Date of filing: **16.06.2025**

(51) International Patent Classification (IPC):
*G06Q 30/0201* (2023.01)     *G06Q 40/04* (2012.01)

(52) Cooperative Patent Classification (CPC):
**G06Q 40/04; G06Q 30/0206**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.11.2024 TW 113143463**

(71) Applicant: APh ePower Co., Ltd.
**Kaohsiung City 821 (TW)**

(72) Inventors:
• LAN, Yi-Chia
  **821 Kaohsiung City (TW)**
• HUANG, Yi-Yun
  **821 Kaohsiung City (TW)**
• SU, Hsiu-Hsien
  **821 Kaohsiung City (TW)**

(74) Representative: **Becker, Eberhard**
**Becker Kurig & Partner**
**Patentanwälte mbB**
**Bavariastraße 7**
**80336 München (DE)**

(54) **CARBON CREDIT TRADE SUPPORT SYSTEM**

(57) A carbon credit trade support system (100) is provided. A carbon credit trading decision support module (102) calculates a trade demand matching degree according to carbon credit purchase demand data, carbon credit sales data, and carbon credit trading data of a plurality of carbon credit trading platforms, provides a carbon credit trading contract according to a preset matching degree, the trade demand matching degree, the carbon credit purchase demand data, and the carbon credit sales data, calculates a carbon credit predicted price according to the carbon credit trading data of the plurality of carbon credit trading platforms, and provides a trading decision suggestion according to the carbon credit predicted price.

FIG. 1

**Description**

BACKGROUND OF THE INVENTION

Field of the Invention

The invention relates to a trade support system, and in particular to a carbon credit trade support system.

Description of Related Art

The existing carbon credit trading system relies on manual search, matchmaking, and matching of trading objects, resulting in a cumbersome and inefficient trading process. In addition, the carbon credit prices, platform fees, trading fees, and buy and sell procedures of different platforms are all different, and there is a high lack of information transparency, making it difficult for users to obtain the best price for real-time trading. In addition, the existing system lacks detailed historical data and future price forecasts, making it impossible for users to comprehensively assess market trends and risks.

SUMMARY OF THE INVENTION

The invention provides a carbon credit trade support system that may improve the transparency, convenience, and immediacy of carbon credit trading, and provide future price forecasts of carbon credit to facilitate users to evaluate market trends and risks.

A carbon credit trade support system of the invention includes a database and a carbon credit trading decision support module. The database stores carbon credit purchase demand data, carbon credit sales data, and carbon credit trading data of a plurality of carbon credit trading platforms. The carbon credit trading decision support module calculates a trade demand matching degree according to the carbon credit purchase demand data, the carbon credit sales data, and the carbon credit trading data of the plurality of carbon credit trading platforms, provides a carbon credit trading contract according to a preset matching degree, the trade demand matching degree, the carbon credit purchase demand data, and the carbon credit sales data, calculates a carbon credit predicted price according to the carbon credit trading data of the plurality of carbon credit trading platforms, and provides a trading decision suggestion according to the carbon credit predicted price.

In an embodiment of the invention, the carbon credit trading decision support module includes a carbon credit trading platform management module, a buy and sell matching module, and a price prediction module. The carbon credit trading platform management module receives the carbon credit trading data of the plurality of carbon credit trading platforms, updates a carbon credit standard and a carbon credit regulation, and determines an additivity of a carbon credit. The buy and sell matching module calculates the trade demand matching degree according to the carbon credit purchase demand data, the carbon credit sales data, and the carbon credit trading data of the plurality of carbon credit trading platforms, wherein the carbon credit purchase demand data and the carbon credit sales data respectively include a carbon credit standard, a carbon credit type, a carbon credit quantity, a carbon credit price, and an area, and provides the carbon credit trading contract according to the carbon credit purchase demand data and the carbon credit sales data for which the trade demand matching degree is greater than the preset matching degree. The price prediction module calculates the carbon credit predicted price according to the carbon credit trading data of the plurality of carbon credit trading platforms, and provides the trading decision suggestion according to the carbon credit predicted price.

In an embodiment of the invention, the carbon credit trade support system further includes a real-time price adjustment module adjusting a carbon credit price of the carbon credit trading contract according to real-time transaction prices and supply and demand conditions of the plurality of carbon credit trading platforms.

In an embodiment of the invention, the carbon credit trade support system includes a carbon emission monitoring unit monitoring carbon emission data and storing a monitoring result in a database, and the carbon credit trading decision support module also provides the trading decision suggestion according to the monitoring result.

In an embodiment of the invention, the carbon credit trade support system includes a user interface unit receiving an input operation for inputting the carbon credit purchase demand data or the carbon credit sales data.

In an embodiment of the invention, the buy and sell matching module calculates the trade demand matching degree according to a following formula:

$$M = \sum_{i=1}^{n} wi \cdot Si \quad (1)$$

wherein M is a trade demand matching degree between a buyer and a seller, Si is a similarity of an i-th matching parameter between the buyer and the seller, wi is a weight of the i-th matching parameter, a sum of wi to wn is equal to 1, and i and n are positive integers.

In an embodiment of the invention, n=5, S1 is a carbon credit standard similarity, S2 is a carbon credit type similarity, S3 is a carbon credit quantity similarity, S4 is a carbon credit price similarity, and S5 is a trading area similarity.

In an embodiment of the invention, when a carbon credit standard, a carbon credit type, and a trading area of the buyer and seller are consistent or inconsistent, S1, S2, and S5 are set to 100% or 0%, respectively, and S3 and S4 are determined according to following formulas (2) and (3):

$$S3 = 100(1 - \frac{|Qb-Qs|}{\max(Qb,Qs)}) \quad (2)$$

$$S4 = 100(1 - \frac{|Pb-Ps|}{\max(Pb,Ps)}) \quad (3)$$

wherein Qb is a demand quantity of a demand side, Qs is a supply side supply quantity, Pb is a demand side quotation, and Ps is a supply side quotation.

In an embodiment of the invention, the price prediction module calculates the carbon credit predicted price according to a following formula (4):

$$Pt + 1 = \sum_{j=0}^{m} xj \cdot Pt - j \quad (4)$$

wherein Pt+1 is a carbon credit price at a time point t+1, Pt-j is a carbon credit price at a time point t-j, xj is a weighting coefficient, and j and m are 0 or positive integers.

In an embodiment of the invention, a carbon credit year needed by the demand side and a carbon credit year provided by a supply side have corresponding weighting coefficients. For example, in a case that a matching time is 2024, a carbon credit weighting coefficient of 2024 is greater than that in 2020.

Based on the above, the carbon credit trading decision support module of an embodiment of the invention may calculate the trade demand matching degree according to the carbon credit purchase demand data and the carbon credit sales data, and provide the carbon credit trading contract according to the preset matching degree, the trade demand matching degree, the carbon credit purchase demand data, and the carbon credit sales data, thereby effectively improving the transparency, convenience, and immediacy of carbon credit trading. In addition, the carbon credit predicted price may be calculated according to the carbon credit trading data of the plurality of carbon credit trading platforms, and a trading decision suggestion may be provided according to the carbon credit predicted price to facilitate a user to evaluate market trends and risks.

In order to make the aforementioned features and advantages of the disclosure more comprehensible, embodiments accompanied with figures are described in detail below.

BRIEF DESCRIPTION OF THE DRAWINGS

FIG. 1 is a schematic diagram of a carbon credit trade support system shown according to an embodiment of the invention.
FIG. 2 is a schematic diagram of a carbon credit trade support system shown according to another embodiment of the invention.

DESCRIPTION OF THE EMBODIMENTS

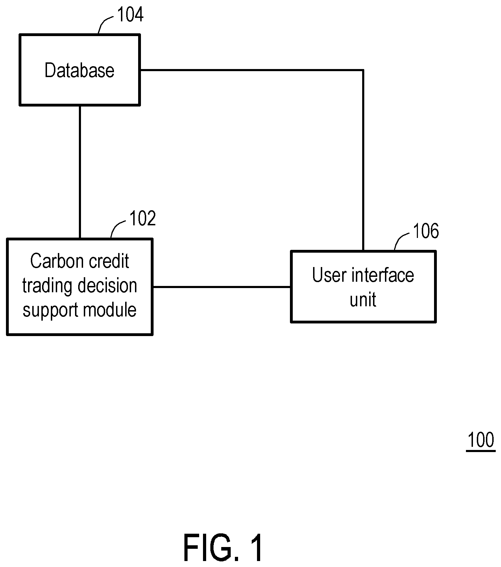

Please refer to FIG. 1 below. FIG. 1 is a schematic diagram of a carbon credit trade support system shown according to an embodiment of the invention. A carbon credit trade support system 100 may include a carbon credit trading decision support module 102, a database 104, and a user interface unit 106. The carbon credit trading decision support module 102 is coupled to the database 104 and the user interface unit 106, and the user interface unit 106 is further coupled to the database 104.

The database 104 may be implemented, for example, by a non-volatile memory, but not limited thereto. The database 104 may store carbon credit purchase demand data and carbon credit sales data, wherein the carbon credit purchase demand data and the carbon credit sales data may respectively include data for carbon credit trading such as a carbon credit standard, a carbon credit type, a carbon credit quantity, a carbon credit price, an area, etc., but are not limited thereto. The user may input the carbon credit purchase demand data or the carbon credit sale data by performing an input operation on the user interface unit 106 to conduct carbon credit trading. The user interface unit 106 may be, for example, a touch display panel, but not limited thereto. In addition, the database 104 may also store carbon credit trading data of a plurality of carbon credit trading platforms (including real-time carbon credit trading data and historical carbon credit trading data of other users on each carbon credit trading platform, and the carbon credit trading data includes carbon purchase demand data and carbon sales data of other traders). The trading platform may include, for example, Taiwan Carbon Solution Exchange (TCX), Climate Impact X (CIX), Japan Exchange Group (JPX), Carbon Trade eXchange (CTX), AirCarbon Exchange, Xpansiv, Gold Standard, etc., but not limited thereto.

The carbon credit trading decision support module 102 may be implemented by a processor, for example, but not limited thereto. The carbon credit trading decision support module 102 may calculate the trade demand matching degree according to the carbon credit purchase demand data, the carbon credit sales data, and the carbon credit trading data of a plurality of carbon credit trading platforms input by the user, and provide a carbon credit trading contract for the user to sign according to the preset matching degree, the calculated trade demand matching degree, the carbon credit purchase demand data, and the carbon credit sales data, wherein the contract signing method may include, but is not limited to, electronic signature and digital signature to ensure the legal effect and the security of the trade. In addition, the carbon credit trading decision support module 102 may also calculate the carbon credit trading predicted price according to the carbon credit trading data of the plurality of carbon credit trading platforms, and provide a trading decision suggestion according to the carbon credit trading predicted price, such as providing a buying price or selling price suggestion and an analysis report, but not limited thereto.

In some embodiments, the database 104 may be a distributed database module, each module including a blockchain storage node for storing and verifying multiple data. The carbon credit trading decision support module 102 may perform a verification operation based on a multi-party secure computing technique of zero-knowledge proof, for example, to ensure data integrity and non-tamperability. In addition, the carbon credit trading decision support module 102 may include, for example, a data processing unit that may use a neural network to extract market trend indicators from the carbon credit trading data using a deep learning data filtering method.

In other embodiments, the database 104 may include a cache memory, and the carbon credit trading decision support module 102 may store the carbon credit trading data in the cache memory according to time relevance, and adjust the cache priority and the data retention time according to the volatility of the carbon credit trading data. For example, the carbon credit trading decision support module 102 may store the carbon credit trading data within the most recent preset period of time into the cache memory, and adjust the access priority of the carbon credit trading data in the cache memory and the data retention time in the cache memory according to the price change rate and the transaction volume change rate. For example, the cache priority of carbon credit trading data with high price volatility (e.g., the price change rate is higher than the preset price change rate) is increased, and the data retention time of carbon credit trading data with a sudden increase in transaction volume (e.g., the transaction volume increase rate is higher than the preset transaction volume increase rate) is extended, so as to improve the cache hit rate and avoid data expiration. In this way, the carbon credit trading decision support module 102 may obtain key data more quickly, increase the efficiency of calculating the trade demand matching degree and the carbon credit predicted price, and significantly improve the immediacy of trade matching and price prediction, avoiding cache failure due to rapid changes in data in high-frequency trading.

In some embodiments, the carbon credit trading decision support module 102 may input the carbon credit trading data into a priority adjustment model (which may be, for example, a trained artificial intelligence model) to calculate a volatility score, and adjust the priority of the carbon credit trading data and the data retention time according to the volatility score.

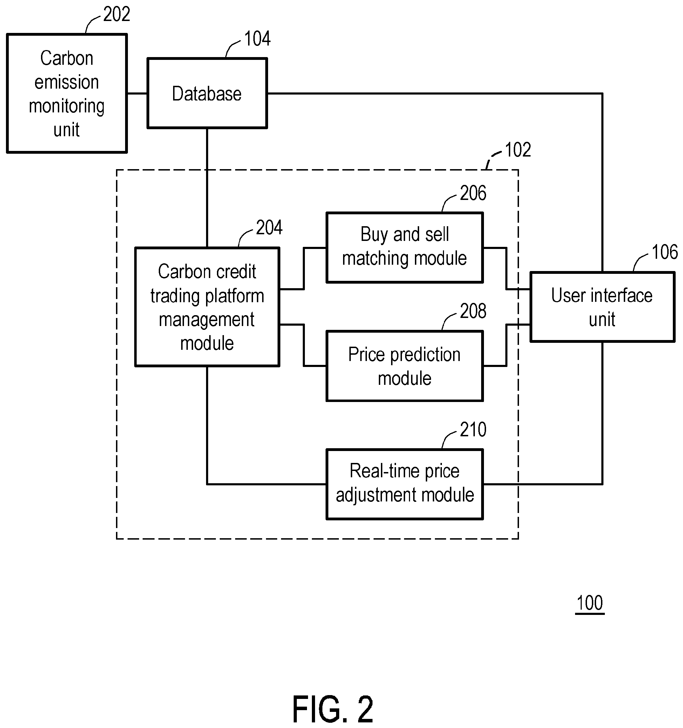

FIG. 2 is a schematic diagram of a carbon credit trade support system shown according to another embodiment of the invention. Furthermore, the carbon credit trade support system may also include a carbon emission monitoring unit 202 as shown in FIG. 2. In addition, the carbon credit trading decision support module 102 may include a carbon credit trading platform management module 204, a buy and sell matching module 206, a price prediction module 208, and a real-time price adjustment module 210. The carbon emission monitoring unit 202 is coupled to the database 104, the carbon credit trading platform management module 204 is coupled to the buy and sell matching module 206, the price prediction module 208, and the real-time price adjustment module 210, and the buy and sell matching module 206, the price prediction module 208, and the real-time price adjustment module 210 are coupled to the user interface unit 106.

The carbon emission monitoring unit 202 may be, for example, an energy management system (EMS) that may monitor and manage the carbon emission data of energy equipment and store the monitoring result in the database 104 so that the carbon credit trading decision support module 102 may provide a trading decision suggestion based on the monitoring result, such as providing a carbon offset suggestion according to the current emission status, and prompting the carbon credit trading needed to achieve carbon neutrality or negative carbon emissions. The carbon credit trading platform management module 204 may receive carbon credit trading data from various carbon credit trading platforms to integrate the carbon credit trading data from various platforms, such as real-time prices, transaction volumes, etc., but not limited thereto. In addition, the carbon credit trading platform management module 204 may also update carbon credit standards and carbon credit regulations, and determine the additivity of carbon credit to ensure the legitimacy of the carbon credit obtained by the buyer.

The buy and sell matching module 206 may analyze historical data such as demand data of carbon credit purchase via a reinforcement learning algorithm to calculate the trade matching degree, or calculate the trade demand matching degree according to the carbon credit purchase demand data and the carbon credit sales data. For example, the buy and sell matching module 206 may calculate the trade demand matching degree M according to the following formula (1).

$$M = \sum_{i=1}^{n} wi \cdot Si \quad (1)$$

In particular, the value of M may be, for example, 0 to 100, Si is the similarity between the buyer and the seller regarding the i-th matching parameter, wi is the weight of the i-th matching parameter, the sum of wi to wn is equal to 1, and i and n are positive integers. For example, it is assumed that n=5, the matching parameters S1 to S5 include carbon credit standard, carbon credit type, carbon credit quantity, carbon credit price, and buy and sell area, respectively. When the carbon credit standard of the buyer and seller is consistent or inconsistent, the value of S1 is 100 and 0 respectively. Similarly, when the carbon credit type and the buy and sell area are consistent or inconsistent, S2 and S5 may also be 100 or 0 respectively. In addition, the similarity S3 of the carbon credit quantity between the buyer and the seller and the similarity S4 of the carbon credit price may be expressed as the following formulas (2) and (3) respectively.

$$S3 = 100\left(1 - \frac{|Qb - Qs|}{\max(Qb, Qs)}\right) \quad (2)$$

$$S4 = 100\left(1 - \frac{|Pb - Ps|}{\max(Pb, Ps)}\right) \quad (3)$$

In particular, Qb is the demand quantity of the demand side, Qs is the supply side supply quantity, Pb is the demand side quotation, and Ps is the supply side quotation. Assuming that the carbon credit standard weight w1, the carbon credit type weight w2, the carbon credit quantity weight w3, the carbon credit price weight w4, and the buy and sell area weight w5 are 0.2, 0.2, 0.2, 0.3, and 0.1 respectively, the carbon credit standard of the demand side is A, the carbon credit standard of the supply side is A (the carbon credit standard of the demand side and the supply side are the same, so S1=100), the carbon credit type of the demand side is B, the carbon credit type of the supply side is B (the types of the demand side and the supply side are the same, so S1=100), the carbon credit quantity of the demand side is 1000, the carbon credit quantity of the supply side is 1200 (S3=83.33 may be calculated according to formula (2)), the carbon credit buying price of the demand side is 50, the carbon credit selling price of the supply side is 45 (S4=90 may be calculated according to formula (3)), the area of the demand side is C, the area of the supply side is C (the areas of the demand side and the supply side are the same, so S5=100), then formula (1) shows that the trade demand matching degree M is equal to 93.67.

After the trade demand matching degree M is calculated, the buy and sell matching module 206 may determine whether the trade demand matching degree M is greater than a preset matching degree. In the present embodiment, the preset matching degree may be, for example, 80, but not limited thereto. The buy and sell matching module 206 may list the buyer and seller for which the trade demand matching degree M is greater than the preset matching degree as trading candidates. After the trade demand matching degree is calculated according to the carbon credit purchase demand data or the carbon credit sales data input by the user and the carbon credit trading data of each carbon credit trading platform, and the plurality of trading candidates are obtained, the buy and sell matching module 206 may select the trading candidate with the highest trade demand matching degree from the plurality of trading candidates to formulate a carbon credit trading contract to ensure that the user obtains the most favorable trading contract. In some embodiments, the buy and sell matching module 206 may automatically formulate a smart contract to conduct carbon credit trading according to the trade demand matching degree, a preset matching degree threshold, and market conditions. In addition, since the carbon credit price changes in real time, the real-time price adjustment module 210 may adjust the carbon credit price of the carbon credit trading contract displayed in the user interface unit 106 according to the real-time transaction price and the supply and demand conditions of the carbon credit trading platforms, so that users may grasp the latest carbon credit price changes in real time and evaluate market trends and risks, wherein the frequency of adjusting the carbon credit price by the real-time price adjustment module 210 may be set by the user according to demand to obtain market insights that best suit the trading strategy thereof, for example. In some embodiments, the buy and sell matching module 206 may also select the trading candidates with the highest trade demand matching degree from a plurality of trading candidates to formulate a plurality of carbon credit trading contracts. In this way, when the real-time price adjustment module 210 updates the carbon credit price of the carbon credit trading contract, the user may more flexibly select the carbon credit trading contract to be signed.

In addition, the price prediction module 208 may calculate the carbon credit predicted price according to the carbon credit trading data of the plurality of carbon credit trading platforms, and provide the trading decision suggestion according to the carbon credit predicted price. The price prediction module 208 may calculate the carbon credit predicted price according to the following formula (4), for example.

$$Pt + 1 = \sum_{j=0}^{m} xj \cdot Pt - j \quad (4)$$

In particular, Pt+1 is the carbon credit price at the future time point t+1, Pt-j is the historical carbon credit price at the time point t-j, and xj is the weighting coefficient corresponding to the time point t-j. The earlier the carbon credit price at the time point, the smaller the weighting coefficient corresponding to the carbon credit price is, that is, the smaller the weighting coefficient corresponding to the carbon credit price in the distant past is. The sum of x0 to xm is equal to 1, and j and m are 0 or positive integers. For example, it is assumed that m=2, that is, the carbon credit prices at the current time point Pt and the two most recent time points Pt-1 and Pt-2 are 50, 52, and 48 respectively, and the corresponding weights x0, x1, and x2 may be 0.5, 0.3, and 0.2 respectively. According to formula (4), it may be calculated that the carbon credit price Pt+1 at the future time point t+1 is equal to 50.2. The price prediction module 208 may provide the trading decision suggestion according to the calculated carbon credit predicted price. The trading decision suggestion may include, for example, the best trading date, trading platform, carbon credit type, carbon credit quantity, and future price trend, etc., but not limited thereto. In other embodiments, the price prediction module 208 may also provide the trading decision suggestion according to the carbon credit trading data and prediction models of the plurality of carbon credit trading platforms, wherein the prediction model may be, for example, an artificial intelligence model (such as a long short-term memory network (LSTM) model, but not limited thereto), by inputting the carbon credit trading data into the artificial intelligence model to perform time series analysis, machine learning, deep learning, and prediction of future price trends, and provide the trading decision suggestion according to the prediction result output by the artificial intelligence model.

Based on the above, the carbon credit trading decision support module of an embodiment of the invention may calculate the trade demand matching degree according to the carbon credit purchase demand data and the carbon credit sales data, and provide the carbon credit trading contract according to the preset matching degree, the trade demand matching degree, the carbon credit purchase demand data, and the carbon credit sales data, thereby effectively improving the transparency, convenience, and immediacy of carbon credit trading. In addition, the carbon credit predicted price may be calculated according to the carbon credit trading data of the plurality of carbon credit trading platforms, and the trading decision suggestion may be provided according to the carbon credit predicted price to facilitate the user to evaluate market trends and risks. In some embodiments, the carbon credit trading decision support module may also utilize an artificial intelligence technique to analyze historical data and accurately predict future price trends, allowing users to comprehensively assess market trends and risks and make optimal trading decisions.

**Claims**

1. A carbon credit trade support system (100), comprising:

a database (104) storing carbon credit purchase demand data, carbon credit sales data, and carbon credit trading data of a plurality of carbon credit trading platforms; and
a carbon credit trading decision support module (102) calculating a trade demand matching degree according to the carbon credit purchase demand data, the carbon credit sales data, and carbon credit trading data of the carbon credit trading platforms, providing a carbon credit trading contract according to a preset matching degree, the trade demand matching degree, the carbon credit purchase demand data, and the carbon credit sales data, calculating a carbon credit predicted price according to the carbon credit trading data of the carbon credit trading platforms, and providing a trading decision suggestion according to the carbon credit predicted price.

2. The carbon credit trade support system (100) of claim 1, wherein the carbon credit trading decision support module (102) comprises:

a carbon credit trading platform management module (204) receiving the carbon credit trading data of the carbon credit trading platforms, updating a carbon credit standard and a carbon credit regulation, and determining an additivity of a carbon credit;
a buy and sell matching module (206) calculating the trade demand matching degree according to the carbon credit purchase demand data, the carbon credit sales data, and the carbon credit trading data of the carbon credit trading platforms, wherein the carbon credit purchase demand data and the carbon credit sales data respectively comprise a carbon credit standard, a carbon credit type, a carbon credit quantity, a carbon credit price, and an area, and provides the carbon credit trading contract according to the carbon credit purchase demand data and the carbon credit sales data for which the trade demand matching degree is greater than the preset matching degree; and
a price prediction module (208) calculating the carbon credit predicted price according to the carbon credit trading data of the carbon credit trading platforms, and providing the trading decision suggestion according to the carbon credit predicted price.

3. The carbon credit trade support system (100) of claim 2, further comprising:
a real-time price adjustment module (210) adjusting a carbon credit price of the carbon credit trading contract according to real-time transaction prices and supply and demand conditions of the carbon credit trading platforms.

4. The carbon credit trade support system (100) of claim 1, comprising:
a carbon emission monitoring unit (202) monitoring carbon emission data and storing a monitoring result in the database (104), wherein the carbon credit trading decision support module (102) also provides the trading decision suggestion according to the monitoring result.

5. The carbon credit trade support system (100) of claim 1, comprising:
a user interface unit (106) receiving an input operation for inputting the carbon credit purchase demand data or the carbon credit sales data.

6. The carbon credit trade support system (100) of claim 2, wherein the buy and sell matching module (206) calculates the trade demand matching degree according to a following formula:

$$M = \sum_{i=1}^{n} wi \cdot Si \quad (1)$$

wherein M is a trade demand matching degree between a buyer and a seller, Si is a similarity of an i-th matching parameter between the buyer and the seller, wi is a weight of the i-th matching parameter, a sum of wi to wn is equal to 1, and i and n are positive integers.

7. The carbon credit trade support system (100) of claim 6, wherein n=5, S1 is a carbon credit standard similarity, S2 is a carbon credit type similarity, S3 is a carbon credit quantity similarity, S4 is a carbon credit price similarity, and S5 is a trading area similarity.

8. The carbon credit trade support system (100) of claim 7, wherein when a carbon credit standard, a carbon credit type, and a trading area of the buyer and seller are consistent or inconsistent, S1, S2, and S5 are set to 100% or 0%, respectively, and S3 and S4 are determined according to following formulas (2) and (3):

$$S3 = 100(1 - \frac{|Qb - Qs|}{\max(Qb, Qs)}) \quad (2)$$

$$S4 = 100(1 - \frac{|Pb - Ps|}{\max(Pb, Ps)}) \quad (3)$$

wherein Qb is a demand quantity of a demand side, Qs is a supply side supply quantity, Pb is a demand side quotation, and Ps is a supply side quotation.

9. The carbon credit trade support system (100) of claim 1, wherein the price prediction module (208) calculates the carbon credit prediction price according to a following formula (4):

$$Pt + 1 = \sum_{j=0}^{m} xj \cdot Pt - j \quad (4)$$

wherein Pt+1 is a carbon credit price at a time point t+1, Pt-j is a carbon credit price at a time point t-j, xj is a weighting coefficient, and j and m are 0 or positive integers.

10. The carbon credit trade support system (100) of claim 9, wherein a weighting coefficient corresponding to a carbon credit price at an earlier time point is less.

Database — 104

Carbon credit trading decision support module — 102

User interface unit — 106

100

FIG. 1

FIG. 2

9

**EUROPEAN SEARCH REPORT**

Application Number

EP 25 18 2910

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 798 675 A (STATE GRID BEIJING ELECTRIC POWER CO; STATE GRID CORP CHINA) 18 October 2024 (2024-10-18) * page 2 - page 25 * ----- | 1-10 | INV. G06Q30/0201 G06Q40/04 |
| A | CN 114 596 162 A (ZHANG QIAOLING) 7 June 2022 (2022-06-07) * page 2 - page 14 * ----- | 1-10 | |
| A | US 2008/228632 A1 (GOTTHELF PHILIP [US] ET AL) 18 September 2008 (2008-09-18) * paragraph [0010] - paragraph [0012] * * paragraph [0038] - paragraph [0047] * * paragraph [0067] - paragraph [0072] * * paragraph [0107] - paragraph [0135] * * figures * ----- | 1-10 | |
| A | CN 116 596 671 A (UNIV FUDAN) 15 August 2023 (2023-08-15) * page 1 - page 11 * ----- | 1-10 | TECHNICAL FIELDS SEARCHED (IPC) G06Q |

The present search report has been drawn up for all claims

| Place of search | Date of completion of the search | Examiner |
|---|---|---|
| The Hague | 13 November 2025 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 2910

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | | | Publication date | Patent family member(s) | | Publication date |
|---|---|---|---|---|---|---|
| CN 118798675 | A | | 18-10-2024 | NONE | | |
| CN 114596162 | A | | 07-06-2022 | NONE | | |
| US 2008228632 | A1 | | 18-09-2008 | US | 2008228516 A1 | 18-09-2008 |
| | | | | US | 2008228558 A1 | 18-09-2008 |
| | | | | US | 2008228628 A1 | 18-09-2008 |
| | | | | US | 2008228629 A1 | 18-09-2008 |
| | | | | US | 2008228630 A1 | 18-09-2008 |
| | | | | US | 2008228631 A1 | 18-09-2008 |
| | | | | US | 2008228632 A1 | 18-09-2008 |
| | | | | US | 2008228664 A1 | 18-09-2008 |
| | | | | US | 2008228665 A1 | 18-09-2008 |
| | | | | WO | 2008112827 A1 | 18-09-2008 |
| | | | | WO | 2008112829 A1 | 18-09-2008 |
| | | | | WO | 2008112830 A2 | 18-09-2008 |
| CN 116596671 | A | | 15-08-2023 | NONE | | |

EPO FORM P0459

For more details about this annex : see Official Journal of the European Patent Office, No. 12/82